Europäisches Patentamt

European Patent Office

Office européen des brevets

(19)

(11) EP 1 158 732 A2

(12) EUROPEAN PATENT APPLICATION

(43) Date of publication:
28.11.2001 Bulletin 2001/48

(51) Int Cl.$^7$: H04L 12/56

(21) Application number: 01201702.6

(22) Date of filing: 09.05.2001

| | |
|---|---|
| (84) Designated Contracting States:<br>AT BE CH CY DE DK ES FI FR GB GR IE IT LI LU<br>MC NL PT SE TR<br>Designated Extension States:<br>AL LT LV MK RO SI | (72) Inventors:<br>• Reeve, Andrew<br>  Winchester, Hampshire SO22 5AH (GB)<br>• Davis, Simon Paul<br>  Romsey, Hampshire SO51 7LX (GB) |
| (30) Priority: 25.05.2000 GB 0012600<br>06.10.2000 GB 0024455 | (74) Representative: Condon, Neil et al<br>Intellectual Property Department,<br>Siemens Shared Services Limited,<br>Siemens House,<br>Oldbury<br>Bracknell, Berkshire RG12 8FZ (GB) |
| (71) Applicant: ROKE MANOR RESEARCH LIMITED<br>Romsey, Hampshire SO51 0ZN (GB) | |

(54) **Improvements in or relating to packet switching**

(57)     Described herein is a method of cell level scheduling for handling unicast traffic in routing devices, for example, crossbar switches. This is achieved by the provision of support for multimedia and real-time traffic in large bandwidth routing devices known as terabit routers. Each terabit router has a plurality of ingress line interface cards (210, 212, 214, 216), a plurality of egress line interface cards (220, 222, 224, 226) and a cell based cross-bar (202). Each ingress card has a plurality of queues, a different queue for each of the egress cards respectively. The cross-bar (202) is controlled by a cross-bar controller (204) in association with a bandwidth controller (206). In operation, a target rate matrix is maintained over a set period. At the beginning of each period, a matrix of numbers of cells queued to be transmitted is calculated in accordance with the target rate. For each successive cell slot within the period, a configuration is found which matches the cell number matrix by servicing only queues which have non-zero cell counts. At the end of the period, the cell counts are all zero.

Fig. 2

EP 1 158 732 A2

**Description**

The present invention relates to improvements in or relating to packet switches, and is particularly concerned with the use of such switches in Internet systems.

Traffic volume in the Internet is growing exponentially, almost doubling every 3 months. The current capacity of internet protocol (IP) routers is insufficient to meet this demand and hence there is a need for IP routers that can route IP traffic at extremely large aggregate bandwidths in the order of several Terabit/s. Such routers are termed "Terabit Routers".

Two important trends are also evident. First, operators are consolidating all traffic onto a single IP back-bone. Secondly, IP is increasingly required to support real-time and multimedia traffic. This means that the next generation of routers must also support 'Quality of Service' (QoS). In particular, they must support low bounded delay for real-time traffic.

It is therefore an object of the present invention to provide a traffic management system suitable for use in a terabit router which meets the requirements for IP traffic. In such a router, variable length packets of data are sent in fixed length cells across a cross-bar switch.

In accordance with one aspect of the present invention, there is provided a traffic management system for a packet switch comprising:-

a cross-bar;
a plurality of ingress means connected to an input side of the cross-bar;
a plurality of egress means connected to an output side of the cross-bar;
a bandwidth controller for allocating a bandwidth to each ingress-egress pairing; and
a cross-bar controller for controlling operation of the cross-bar in accordance with the bandwidth allocated by the bandwidth controller.

A packet switch is a device which receives packets of data on a plurality of input ports and transfers each packet to a specific one of a plurality of output ports. The packets of data can be of variable length or fixed length. An example of a packet switch is a terabit router as described above.

In accordance with another aspect of the present invention, there is provided a method of controlling a packet switch connected between a plurality of ingress means and a plurality of egress means, each ingress means having a plurality of packet queues for transmission, the method comprising the steps of:-

a) defining a period over which the packet queues are to be transmitted;
b) calculating a rate matrix having elements corresponding to the rates from an ingress means to an egress means;
c) at the beginning of each period, calculating a cell matrix containing a number of cells which must be transmitted from each of the packet queues during the period;
d) for each cell slot in the period, determining a configuration which matches the cell matrix by only servicing packet queues with non-zero cell counts, the configuration being determined in accordance with the following constraints:-

(i) selecting no more than one cell from each ingress means; and
(ii) routing no more than one cell to each egress means;

e) decrementing the cell counts of each queue serviced by one; and
f) repeating steps c), d) and e) until the end of the period.

The term 'servicing' is intended to mean selecting a queue, transmitting a cell from that queue, and then deleting that cell from the queue.

The ingress means and the egress means may comprise line interface cards (LICs) which may also carry out a forwarding function. Such LICs may be known as 'forwarders'.

A traffic management system and its method of operation in accordance with the present invention advantageously is starvation free, and bandwidth is always allocated to a packet queue with non-zero occupancy across the cross-bar. The allocation of bandwidth and priority to any packet queue is also fair. Configured rates are also provided in accordance with each ingress packet queue — the rates being calculated to ensure the QoS of traffic streams.

Moreover, the system and method in accordance with the present invention also provides bounded low delay across the cross-bar, and the efficient (substantially 100%) utilisation of the cross-bar swithout loss of performance.

For a better understanding of the present invention, reference will now be made, by way of example only, to the accompanying drawings in which:-

Figure 1 illustrates a terabit router architecture;
Figure 2 illustrates a cross-bar controller for use in the Figure 1 router architecture;
Figure 3 illustrates a rate matrix (8x8);
Figure 4 illustrates an example cross-bar configuration matrix (8x8); and
Figure 5 illustrates a 'find_config' procedure.

Terabit routers will require a scalable high capacity communications path between its line functions. One technique of implementing this is to use a cell based cross-bar as will be described below. However, the effectiveness of this technique with respect to the efficiency of the router and its ability to support the quality of service (QoS) of the communications it supports, will depend on the cross-bar configuration method employed.

In accordance with the present invention such a cross-bar configuration method provides very high levels of efficiency and support for quality of service. It has application in any switch or router such as IP routers, asynchronous transfer mode (ATM) switches or MPLS label switch routers.

Although cross-bar architectures are already known for use in routers and switches, they typically suffer from the inability to achieve 100% utilisation of the cross-bar without incurring very long delays; and the inability to guarantee upper bounds for delay as required to support real-time traffic.

Initially, a terabit router architecture is described and an explanation given of what is meant by a cell based cross-bar. Although the present invention is described with reference to a terabit router, it will readily be appreciated that it is not limited to such a device and is equally applicable to any packet switch device as stated above.

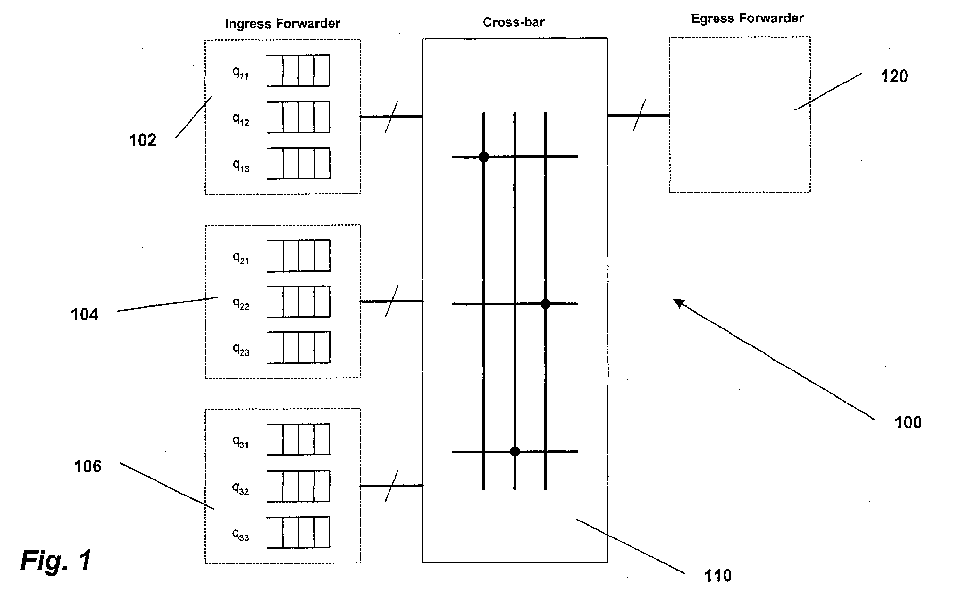

Figure 1 illustrates a terabit router architecture 100 in which packets arrive at ingress forwarders 102, 104, 106 via their input port(s) (not shown) and are routed across a cross-bar 110 to a correct egress forwarder 120 which transmits them across its output port(s) (not shown). Each ingress forwarder 102, 104, 106 maintains a separate packet queue for each egress forwarder 120.

It will be appreciated that although only one egress forwarder 120 is shown in Figure 1, the number of egress forwarders will be the same as the number of ingress forwarders.

By way of explanation, a cell based cross-bar is characterised as follows:

a) Each ingress line function may be connected to any egress line functions.
b) Each ingress line function may only be connected to one egress line function at a time.
c) Each egress line function may only be connected to one ingress line function at a time.
d) All ingresses transmit in parallel across the cross-bar.
e) Data is transmitted across the cross-bar in small fixed sized cells, for example, a cell size is typically 64 octets.
f) Cell transmission is synchronised across all the ingress line functions.
This means that for each cell cycle, each ingress line function starts transmitting the next cell at the same time.
g) The cross-bar is reconfigured at the end of every cell cycle.

The present invention relates to a cross-bar unicast cell scheduling method for which the following desirable features:-

i starvation free: No packet queue with non-zero occupancy must ever be starved of bandwidth across the cross-bar.
ii fair: The allocation of bandwidth and priority to packet queue must be fair.
iii provide configured rates: Rates must be implemented which are configured for each ingress packet queue $q_{jk}$ where $j$ indicates the ingress, $k$ indicates the egress, and $q_{jk}$ represents the packet queue at the ingress $j$ for packets destined for egress $k$. The rates are calculated to ensure the QoS of traffic streams.
iv bounded low delay: Bounded low delay across the cross-bar must be provided. Note that the overall delay across the whole router will also be determined by the traffic management functions implemented in the line interface cards (LICs).
v efficiency: It is desirable that 100% utilisation of the cross-bar be achieved without loss of performance.

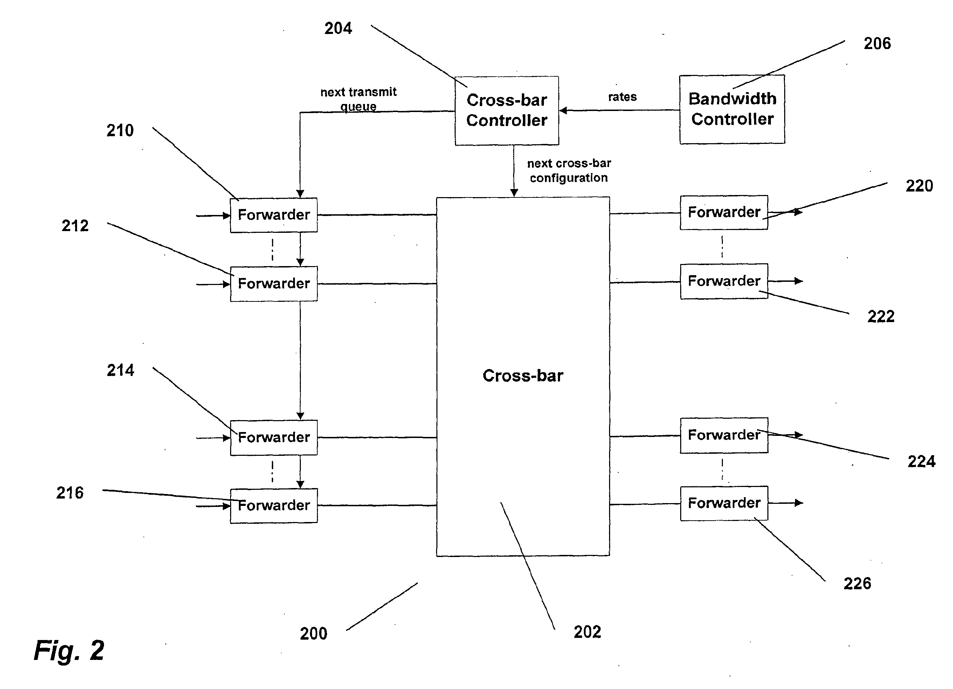

An embodiment of a cross-bar controller arrangement 200 in accordance with the present invention is depicted in Figure 2.

The cross-bar controller arrangement 200 comprises a cross-bar 202 which is controlled by a cross-bar controller 204 which in turn is controlled by a bandwidth controller 206. The bandwidth controller 206 is responsible for efficient allocation of the bandwidth across the cross-bar 202, and calculates the rates that each ingress forwarder 210, 212, 214, 216 must transmit to each egress forwarder 220, 222, 224, 226. This is the same as the rate at which data must be transmitted from each packet queue. The means by which these rates are calculated is beyond the scope of this description.

The bandwidth controller 206 transmits the rates to the cross-bar controller 204 which is responsible for efficient scheduling of data across the cross-bar 202 whilst maintaining the rates calculated by the bandwidth controller 206. The cross-bar controller 204 is responsible for calculating the following information at the end of each cell cycle.

1. it transmits to each ingress forwarder the identity of the next packet queue from which to transmit. Recall that each ingress forwarder maintains a separate queue of packets for each egress forwarder; and
2. it transmits to the cross-bar the next cross-bar configuration.

A description of how the cross-bar controller 204 determines this information follows:-

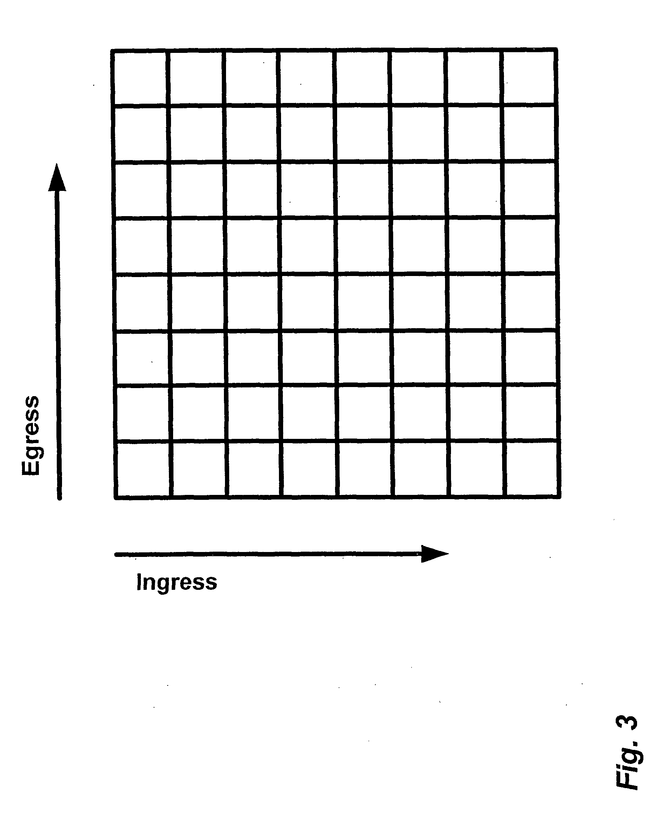

The rates can be represented using a matrix as depicted in Figure 3, which provides the example of an 8 x 8 router. Let us call this matrix $R$, with elements $r_{jk}$, such that $r_{jk}$ is the rate from ingress forwarder $j$ to egress forwarder $k$. The rate unit employed is cells per unit time.

Let $F$ be the maximum rate at which an ingress forwarder 210, 212, 214, 216 can receive data from its input port and transmit it across the cross-bar 202. $F$ is also the maximum rate at which an egress forwarder 220, 222, 224, 226 can receive data from the cross-bar port and transmit it across its output port. This is the maximum possible rate independent of any traffic conditions prevailing at the time.

Let $N$ be the number of ingress forwarders 210, 212, 214, 216. $N$ is also the number of egress forwarders 220, 222, 224, 226.

Then, the following inequalities must be obeyed:-
[0026] For all $j$, where the row sums cannot exceed $F$:-

$$\sum_{k=1}^{N} r_{jk} \leq F \tag{1}$$

For all $k$, where the column sums cannot exceed F:-

$$\sum_{j=1}^{N} r_{jk} \leq F \tag{2}$$

In fact, the bandwidth controller 204 will ensure that the following hold true:-
[0029] For all $j$, the row sums are all equal to $F$:-

$$\sum_{k=1}^{N} r_{jk} = F \tag{3}$$

For all $k$, the column sums are all equal to $F$:-

$$\sum_{j=1}^{N} r_{jk} = F \tag{4}$$

and

$$\sum_{k=1}^{N} \sum_{j=1}^{N} r_{jk} = NF \tag{5}$$

Herein, a matrix with the property that the column and row sums are all equal shall be called a sum-perfect square.

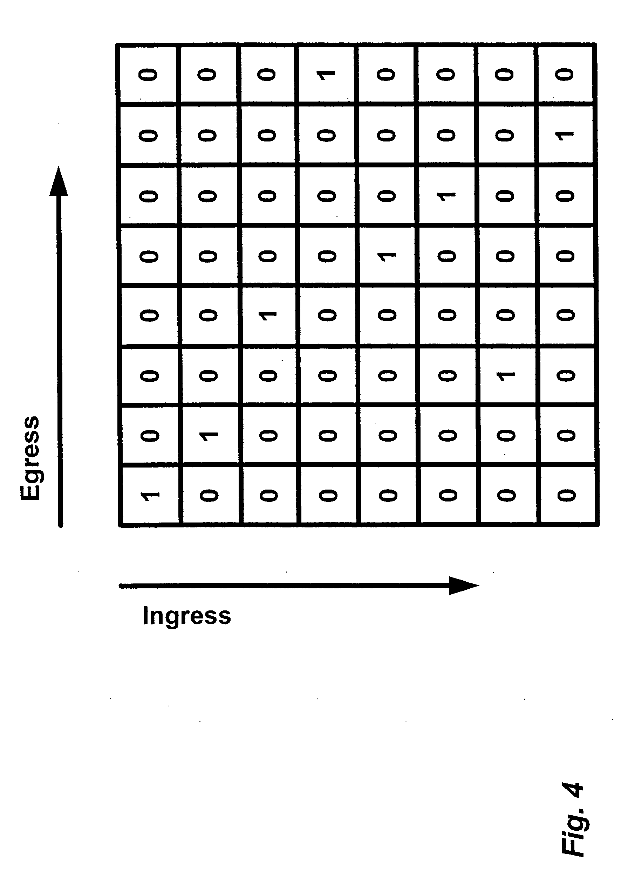

The configuration of the cross-bar 202 can be depicted by a matrix such as that shown in Figure 4. Each entry in the matrix may take the value '0' or '1'. An entry with the value '1' indicates that the cross-bar 202 is configured for transmission of a cell from the corresponding ingress (row index) to the corresponding egress (column index). In particular, a value of '1' indicates a cross-connect between the ingress and egress, and a value of '0' indicates absence of a cross-connect.

In Figure 4, ingress 1 cross-connects with egress 1, ingress 2 with egress 2, ingress 3 with egress 4, ingress 4 with egress 8, ingress 5 with egress 5, ingress 6 with egress 6, ingress 7 with egress 3, and ingress 8 with egress 7.

For unicast operation, the cross-bar configuration matrix has the following properties:-

1. Each row contains exactly one non-zero entry. (Each ingress transmits a cell to exactly one egress.)
2. Each column contains exactly one non-zero entry. (Each egress can receive a cell from one ingress only.)

Note that these properties mean that the matrix forms a sum-perfect square where the row/column sum is 1. Let us call this matrix $X$.

The steps of the method of operation are as follows.

1) The rate matrix $R$ is re-calculated periodically.
2) The rate is maintained over the length of each period.
3) At the beginning of each period, calculate a matrix containing the number of cells that must be transmitted from each of the packet queues $q_{jk}$ during the period to achieve its rate.
4) For each cell slot in the period, find a configuration which matches the cell count matrix by only servicing queues with non-zero cell counts.
5) Decrement by 1 the cell counts of each queue serviced.
6) Repeat from 3) until the end of the period at which all cell counts will be zero.

This is expanded below:-

Let $P$ be the length of the period. This is chosen to be a whole number of cell cycles and to be of magnitude no greater than the maximum tolerated delay for real-time traffic.

Let $T$ be the cell slot number in the period $P$, such $T = 0$ is the first slot and $T = P - 1$ is the last.

Let $C^T$ be the cell count matrix at the beginning of cell slot $T$. Then $C^0$ is calculated as follows:-

$$C^0 = PR \tag{6}$$

The rate matrix $R$ is calculated such that $C^0$ contains integral values. One way of doing this is described in co-pending British patent application no. 9907313.2 (docket number F21558/98P4863).

Note that since $R$ is sum-perfect, then so is $C^0$.

For each $T$, calculate a cross-bar configuration matrix $X^T$ such that

$$x_{jk}^T = 1 \Rightarrow c_{jk}^T > 0 \tag{7}$$

Since $X^T$ provides a cell send opportunity for each $q_{jk}$ such that $x_{jk}^T = 1$, $C^{T+1}$ is calculated as follows:-

$$C^{T+1} = C^T - X^T \tag{8}$$

Since $C^0$ is sum-perfect and $X^T$ is sum-perfect for all $T$, then it is easy to prove that $C^T$ is sum-perfect for all $T$. In particular, $C^P$ is sum-perfect with sum 0 so that all elements are zero and all queues have been given their full complement of cell send opportunities.

An example algorithm for finding a configuration matrix $X^T$ matching cell count matrix $C^T$ is presented below. The main routine calls the 'find_config' routine for the number of time slots in period $P$. 'find_config' is a recursive heuristic algorithm.

The main routine is:

```
for slot = 0 to period_P do
begin
    if not find_config(ingress = 0) then abort;
```

**end**

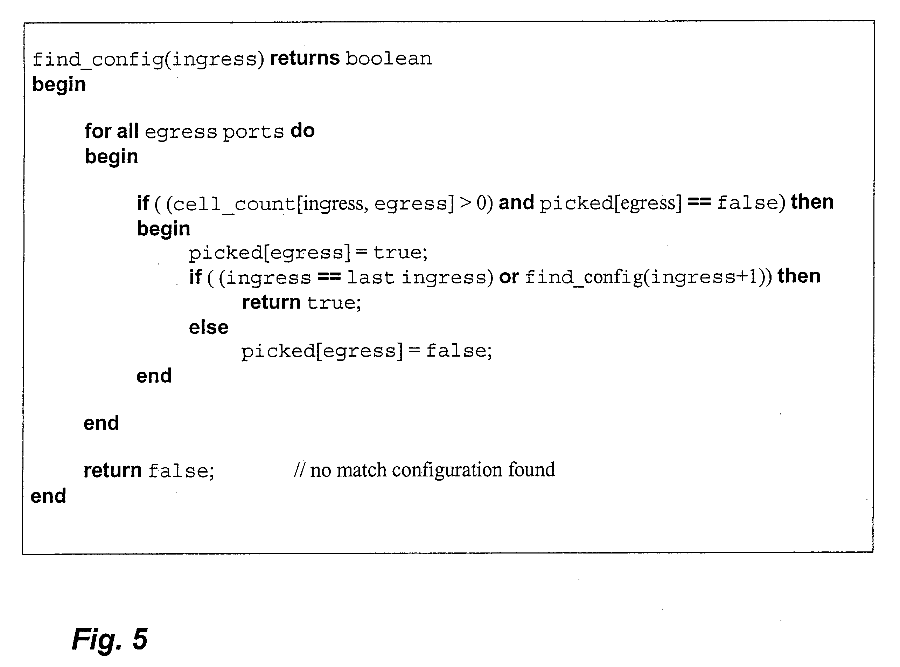

The 'find_config' routine is shown in Figure 5.

**Claims**

1. A traffic management system for a packet switch comprising:-

   a cross-bar;
   a plurality of ingress means connected to an input side of the cross-bar;
   a plurality of egress means connected to an output side of the cross-bar;
   a bandwidth controller for allocating a bandwidth to each ingress-egress pairing; and
   a cross-bar controller for controlling operation of the cross-bar in accordance with the bandwidth allocated by the bandwidth controller.

2. A system according to claim 1, wherein the cross-bar controller also selects the next ingress-egress pairing for each ingress means.

3. A method of controlling a packet switch connected between a plurality of ingress means and a plurality of egress means, each ingress means having a packet queue for transmission, the method comprising the steps of:-

   a) defining a period over which the packet queues are to be transmitted;
   b) calculating a rate matrix having elements corresponding to the rates from an ingress means to an egress means;
   c) at the beginning of each period, calculating a cell matrix containing a number of cells which must be transmitted from each of the packet queues during the period;
   d) for each cell slot in the period, determining a configuration which matches the cell matrix by only servicing packet queues with non-zero cell counts, the configuration being determined in accordance with the following constraints:-

      (i) selecting no more than one cell from each ingress means; and
      (ii) routing no more than one cell to each egress means;

   e) decrementing the cell counts of each queue serviced by one; and
   f) repeating steps c), d) and e) until the end of the period.

4. A traffic management system substantially as hereinbefore described with reference to Figure 2 of the accompanying drawings.

5. A method of controlling a packet switch substantially as hereinbefore described with reference to Figures 2 to 5 of the accompanying drawings.

**Fig. 1**

EP 1 158 732 A2

**Fig. 2**

EP 1 158 732 A2

Egress

Ingress

Fig. 3

Egress

Ingress

| | | | | | | | |
|---|---|---|---|---|---|---|---|
| 1 | 0 | 0 | 0 | 0 | 0 | 0 | 0 |
| 0 | 1 | 0 | 0 | 0 | 0 | 0 | 0 |
| 0 | 0 | 0 | 1 | 0 | 0 | 0 | 0 |
| 0 | 0 | 0 | 0 | 0 | 0 | 0 | 1 |
| 0 | 0 | 0 | 0 | 1 | 0 | 0 | 0 |
| 0 | 0 | 0 | 0 | 0 | 1 | 0 | 0 |
| 0 | 0 | 1 | 0 | 0 | 0 | 0 | 0 |
| 0 | 0 | 0 | 0 | 0 | 0 | 1 | 0 |

*Fig. 4*

```
find_config(ingress) returns boolean
begin

     for all egress ports do
     begin

          if ( (cell_count[ingress, egress] > 0) and picked[egress] == false) then
          begin
               picked[egress] = true;
               if ( (ingress == last ingress) or find_config(ingress+1)) then
                    return true;
               else
                    picked[egress] = false;
          end

     end

     return false;          // no match configuration found
end
```

**Fig. 5**